# EUROPÄISCHE PATENTSCHRIFT

(11) **EP 1 663 729 B1**
(45) Veröffentlichungstag und Bekanntmachung des Hinweises auf die Patenterteilung: **07.03.2007**
(21) Anmeldenummer: 04741419.8
(22) Anmeldetag: 18.08.2004
(51) Int. Cl.: B60R 21/045

(54) **INSASSENSCHUTZSYSTEM FÜR EIN FAHRZEUG**
PASSENGER PROTECTION SYSTEM FOR A VEHICLE
SYSTEME DE PROTECTION D'OCCUPANTS POUR UN VEHICULE

(30) Priorität: 18.09.2003 DE 10343699
(43) Veröffentlichungstag der Anmeldung: 07.06.2006
(73) Patentinhaber: ACTS-Advanced Car Technology Systems GmbH & Co.KG, 63877 Sailauf (DE)
(72) Erfinder: LUDWIG, Sven, 63808 Haibach (DE); SAUER, Stefan, 63857 Waldaschaff (DE); KLAUSGRABER, Marc, 36304 Alsfeld (DE)
(74) Vertreter: Pfiz, Thomas
(86) Internationale Anmeldenummer: PCT/EP2004/009247
(87) Internationale Veröffentlichungsnummer: WO 2005/035322

(56) Entgegenhaltungen:
- DE-A- 4 201 824
- US-A- 5 476 283
- US-A1- 2002 190 514
- ANONYMOUS: "Adjustable knee bolster system" RESEARCH DISCLOSURE, KENNETH MASON PUBLICATIONS, HAMPSHIRE, GB, Bd. 409, Nr. 5, Mai 1998 (1998-05), XP007122683 ISSN: 0374-4353

## Beschreibung

Die Erfindung betrifft ein Insassenschutzsystem für ein Fahrzeug mit einem vorzugsweise als Prallplatte ausgebildeten, eine dem Fahrzeuginsassen zugewandte Prallfläche aufweisenden Rückhaltekörper und einer in einer Gefahrensituation auslösbaren Ausfahrvorrichtung für eine translatorische Ausfahrbewegung des Rückhaltekörpers zwischen einer Ruhestellung und einer zu dem Fahrzeuginsassen hin verlagerten Ausfahrstellung.

Aus der DE-A-43 28 446 und der nächtliegenden DE 42 01 824 A ist eine Sicherheitseinrichtung dieser Art bekannt, bei der eine Polsterplatte in Kniehöhe in der Frontpartie des Fahrzeugs angebracht ist und mittels eines Federantriebs zu den Knien des Fahrgasts hin verschiebbar ist. Der Federantrieb weist eine im Ruhezustand vorgespannte, gegen die Fahrtrichtung auslösbare Blattfeder auf. Die Polsterplatte ist dabei rückseitig an zwei zylindrischen, in Fahrzeuglängsrichtung ausgerichteten Gleitführungen befestigt. Zusätzlich ist eine zu den Gleitführungen parallele Schubstange zur Kraftübertragung von der Blattfeder auf die Polsterplatte vorgesehen. Als nachteilig wird hierbei vor allem der hohe Bauraumbedarf angesehen, der sich durch die Ausrichtung der Führung und der Schubstange in X-Richtung des Fahrzeugs ergibt. Zudem ist bei diesem System die Schutzwirkung auf Grund der geringen Ausfahrgeschwindigkeit und Energieabsorption der Polsterplatte eher beschränkt.

Ausgehend hiervon liegt der Erfindung die Aufgabe zugrunde, die im Stand der Technik aufgetretenen Nachteile zu vermeiden und ein System der eingangs angegebenen Art dahin zu verbessern, dass bei kompakten Bauraumabmaßen eine zuverlässige hohe Sicherheitsfunktion gewährleistet ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine Aktuatoranordnung quer zur eigentlichen Bewegungsrichtung des Rückhalteelements zu schaffen. Dementsprechend wird erfindungsgemäß vorgeschlagen, dass die Ausfahrvorrichtung einen Querantrieb für eine Antriebsbewegung quer zur Ausfahrrichtung und einen Umlenkmechanismus zur Umlenkung der Antriebsbewegung in die Ausfahrbewegung aufweist. Auf diese Weise kann ein sehr kompakter, in der Tiefe begrenzter Bauraum eingehalten werden, was insbesondere den beengten Einbauverhältnissen in der Frontpartie des Fahrzeugs Rechnung trägt. Durch die Ausrichtung des Antriebs in Fahrzeugquerrichtung steht ausreichend Freiraum zu Verfügung, um eine effektive und schnelle Schutzwirkung zu erreichen.

Vorteilhafterweise besitzt der Umlenkmechanismus mindestens einen um eine zur Antriebs- und Ausfahrbewegung senkrechte Drehachse schwenkbaren, zweiarmigen Schwenkhebel, welcher endseitig über Gelenkanschlüsse mit dem Rückhaltekörper und dem Querantrieb gekoppelt ist. Durch die zusätzliche Nutzung eines rotatorischen Freiheitsgrades kann die Kinematik mit vergleichsweise einfachen Mitteln optimiert werden. Eine weitere Verbesserung auch im Hinblick auf eine kompakte Anordnung wird dadurch erreicht, dass der Schwenkhebel als zweiarmiger Winkelhebel im Bereich der Drehachse abgewinkelt ist. Hierbei ist es günstig, wenn der Schwenkhebel an einem ausfahrseitigen Hebelarm über ein Schubgelenk mit dem Rückhaltekörper verbunden ist und an einem antriebseitigen Hebelarm an einer in Antriebsrichtung geführten Antriebsstange vorzugsweise in einer Führungskulisse angelenkt ist.

Um das Einbringen von Quermomenten beim Aufprall einzuschränken, ist es vorteilhaft, wenn der Umlenkmechanismus zwei bezüglich einer senkrecht zur Antriebsrichtung verlaufenden Mittelebene spiegelsymmetrisch zueinander angeordnete Hebelgestänge aufweist.

Eine besonders effektive Aktuatorik lässt sich dadurch erreichen, dass der Querantrieb einen orthogonal zur Ausfahrrichtung ausgerichteten Antriebszylinder aufweist. Eine weitere Verbesserung sieht vor, dass in dem Antriebszylinder mindestens eine im Ruhezustand vorgespannte, mit dem Umlenkmechanismus gekoppelte Antriebsfeder gelagert ist.

Um eine besonders schnelle Reaktion in einer Unfallsituation zu ermöglichen, ist es von Vorteil, wenn der Antriebszylinder über eine pyrotechnische Treibladung mit Druckgas beaufschlagbar ist und eine mit dem Umlenkmechanismus gekoppelte Kolbenstange aufweist.

Um entsprechend der jeweiligen Unfallsituation optimal reagieren zu können, sieht eine bevorzugte Ausführung vor, dass der Antriebszylinder wahlweise mechanisch und/oder pyrotechnisch-pneumatisch betätigbar ist.

Für eine an unterschiedliche Positionen des Fahrzeuginsassen angepasste Rückhaltewirkung ist es günstig, wenn die Ausfahrvorrichtung ein in verschiedenen Ausfahrstellungen wirksames Gesperre, insbesondere ein einseitiges Zahnrichtgesperre zur Rücklaufsicherung des Querantriebs bei der Ausfahrbewegung aufweist.

Um eine zusätzliche Schutzwirkung unter Aufnahme kinetischer Energie des Fahrgastes zu erreichen, ist ein unter Richtungsumkehr der Ausfahrbewegung über den Umlenkmechanismus betätigbarer, unter Energieabsorption verformbarer Aufpralldämpfer vorgesehen. Der Umlenkmechanismus besitzt somit eine Doppelfunktion zum Aufstellen des Rückhaltekörpers und zur Kraftübertragung unter Belastung in Gegenrichtung.

Eine besonders kompakte Ausführung sieht vor, dass der Aufpralldämpfer als Kraftübertragungsglied des Querantriebs in Antriebsrichtung ausgerichtet ist. Hierbei ist es von Vorteil, wenn der Aufpralldämpfer durch ein Teleskoprohr gebildet ist, welches entgegen einer Kraft- und/oder Formschlussverbindung in Antriebsrichtung zusammenschiebbar ist.

Für eine situationsgerechte Reaktion bei einer Unfallfrüherkennung ist es vorteilhaft, wenn die Ausfahrvorrichtung durch eine Unfallerfassungseinrichtung, insbesondere einen Pre-Crash-Sensor bei einer Gefährdungssituation präventiv auslösbar ist.

Für den Fall, dass das System nicht irreversibel beansprucht wurde, ist es von Vorteil, wenn die Ausfahrvorrichtung einen Reversierantrieb zum Zurückfahren des Rückhaltekörpers in die Ruhestellung aufweist.

Eine weitere vorteilhafte Ausführung sieht vor, dass der Rückhaltekörper als Knieschutzplatte für einen Beifahrer im Bereich der Instrumententafel eines Kraftfahrzeugs angeordnet ist und vorteilhafterweise zugleich als Handschuhkastenabdeckung ausgebildet ist.

Im Folgenden wird die Erfindung anhand eines in der Zeichnung in schematischer Weise dargestellten Ausführungsbeispiels näher erläutert. Es zeigen
- Fig. 1: eine aus einer Instrumententafel ausfahrbare Rückhalteeinrichtung als Knieschutzsystem für einen Fahrzeuginsassen in einem vereinfachten ausschnittsweisen Vertikalschnitt des Fahrzeugs;
- Fig. 2 und 3: eine Ausfahrvorrichtung der Rückhalteeinrichtung in einem Horizontalschnitt in der Ruhestellung und in einer Ausfahrstellung; und
- Fig. 4 und 5: eine weitere Ausführungsform einer Ausfahrvorrichtung in einer Fig. 2 und 3 entsprechenden Darstellung.

Das in der Zeichnung dargestellte Schutzsystem 10 dient zur Minderung von Knieverletzungen eines Beifahrers in einer Gefahren- bzw. Unfallsituation. Das System 10 ist im Bereich der Instrumententafel 12 des Fahrzeugs 14 beifahrerseitig in Kniehöhe eingebaut und besteht im Wesentlichen aus einem als Prallplatte 16 ausgebildeten Rückhaltekörper und einer in zwei übereinander liegenden Ebenen über gesonderte Aktuatoreinheiten 18 rückseitig an der Prallplatte angreifenden Ausfahrvorrichtung für eine translatorische Ausfahrbewegung der Prallplatte 16 in eine Ausfahrrichtung 20 auf den Fahrzeuginsassen zu.

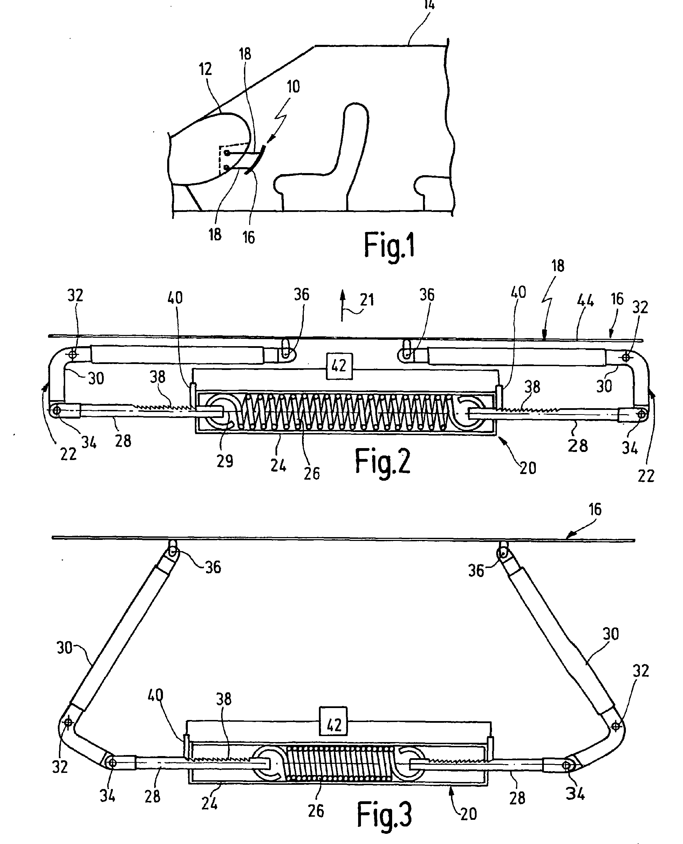

Wie am besten aus Fig. 2 bis 5 ersichtlich, weisen die Aktuatoreinheiten 18 jeweils einen Querantrieb 20 für eine lineare Antriebsbewegung senkrecht zur Ausfahrrichtung 21 und einen Umlenkmechanismus 22 zur Umlenkung der Antriebsbewegung in die Ausfahrbewegung auf. Der Querantrieb umfasst einen in Fahrzeugquerrichtung orthogonal zur Ausfahrrichtung 21 ausgerichteten Antriebszylinder 24, der in den verschiedenen nachstehend beschriebenen Ausführungsformen mechanisch und/oder pyrotechnisch arbeitet.

Bei dem in Fig. 2 gezeigten Ausführungsbeispiel ist in dem Antriebszylinder 24 eine zylindrische Schraubenzugfeder 26 gelagert, die in der in Fig. 2 gezeigten Ruhestellung der Prallplatte 16 vorgespannt ist. An ihren Federenden ist die Schraubenzugfeder 26 mit Zugstangen 28 des Umlenkmechanismus 22 verbunden, die in der Zugachse 29 durch die Stirnseiten des Antriebszylinders 24 geführt sind.

Zur Bewegungsumlenkung weist der Umlenkmechanismus 22 zwei Schwenkhebel 30 auf, die als zweiarmige Winkelhebel im Bereich ihrer Kniestelle um eine zur Ausfahr- und Antriebsbewegung senkrechte fahrzeugfeste Drehachse 32 schwenkbar sind. Die Schwenkhebel 30 sind an ihrem antriebseitigen Hebelarm über jeweils einen Gelenkanschluss 34 mit den Zugstangen 28 und an ihrem ausfahrseitigen Hebelarm über jeweils ein Schubgelenk 36 mit der Prallplatte 16 verbunden.

Für eine Rücklaufsicherung gegen die Zugkraft der Feder 26 ist an jeder Zugstange 28 ein Zahnrichtgesperre 38 vorgesehen, dessen Sperrstück 40 über eine Auslöseeinrichtung 42 entriegelbar ist. Das federbelastete Sperrstück 40 läuft beim Ausfahrvorgang über die entgegen der Zugrichtung geneigten Zahnflanken, während in Rückwärtsrichtung eine formschlüssige Arretierung über senkrechte Gegenflanken erreicht wird. Auf diese Weise ist eine Rücklaufblockierung in jeder Ausfahrstellung möglich, in der ein Kontakt der Prallplatte 16 mit den Knien des Fahrzeuginsassen erreicht wird. Es versteht sich dabei, dass die beiden spiegelsymmetrisch angeordneten Hebelgestänge 28, 30 synchron in der gleichen Wirkungsrichtung betätigt werden, um eine optimale Entfaltung zu erreichen.

Die Prallplatte 16 dient in der Ruhelage als Blende zur Abdeckung der Ausfahrvorrichtung 18 und bildet mit ihrer Vorderseite 44 eine designrelevante Oberfläche des Fahrzeuginterieurs. Im Einsatzfall bildet die Prallplatte 16 ein Kontaktelemente zur Abstützung des Fahrzeuginsassen. In dieser Funktion kann durch eine nicht gezeigte aufgeschäumte nachgiebige Schicht eine erste energieabsorbierende Wirkung erreicht werden.

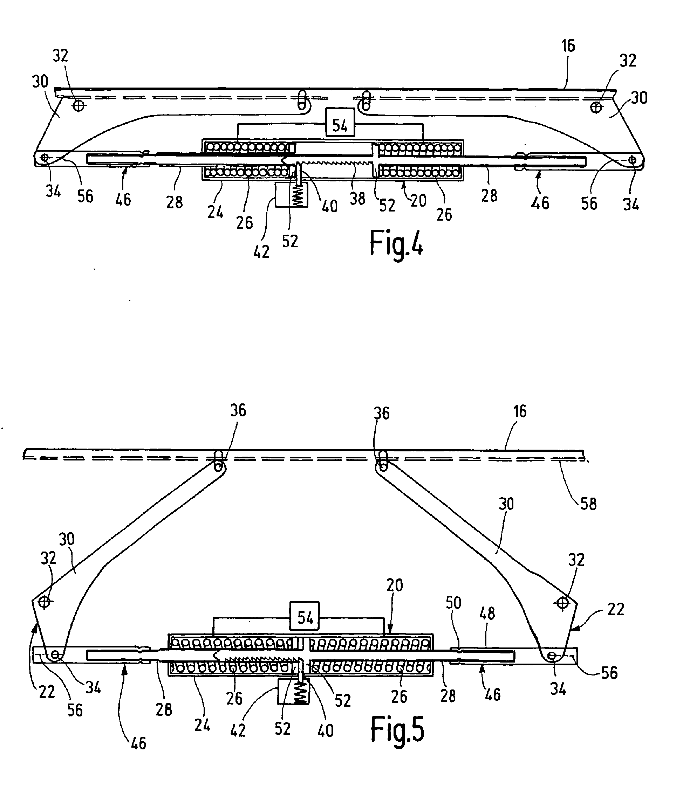

Bei dem in Fig. 4 und 5 gezeigten Ausführungsbeispiel sind zur zusätzlichen Absorption von kinetischer Energie des Fahrzeuginsassen Aufpralldämpfer 46 vorgesehen, die bei einer Rückfahrbewegung unter Belastung durch den Umlenkmechanismus 22 betätigbar sind. Die Aufpralldämpfer 46 sind durch einen Stauchrohrabschnitt 48 am Stangenende der Kolbenstangen 28 gebildet, der bei Überschreiten eines gegebenen Axialkraftniveaus entgegen einer Formschlussverbindung (Sicke 50) teleskopartig bewegbar ist. Dabei kann durch eine geeignete Formschlussgeometrie eine definierte Kraft-Weg-Charakteristik erreicht werden. Zweckmäßig sollte die Rückhaltekraft über dem Weg zunächst steil ansteigen, um dann ab einem bestimmten Kraftniveau konstant zu bleiben. Damit kann das Integral über den Kraftverlauf, dem Betrag der geleisteten Formänderungsarbeit entsprechend, bei gleichzeitiger Begrenzung des Kraftniveaus maximiert werden.

Auf die in dem Antriebszylinder 24 geführten Kolben 52 der Kolbenstangen 28 wirkt jeweils die Vorspannkraft einer stangenseitig angeordneten, zylindrischen Schraubendruckfeder 26. Zusätzlich kann der stangenseitige Zylinderraum über einen pyrotechnisch arbeitenden Gasgenerator 54 mit Treibgas beaufschlagt werden, um so eine schlagartige Entfaltung bzw. Positionierung zu ermöglichen. Die Rücklaufsicherung erfolgt über das Zahnrichtgesperre 38, das in diesem Ausführungsbeispiel durch eine Zahnstange gebildet ist, die an einem Kolben 52 bodenseitig absteht und durch den anderen Hohlkolben hindurch in dessen Hohlstange eintaucht, wobei das federbelastete Sperrstück 40 mit dem Hohlkolben mitgeführt ist. Um bei fahrzeugfester Drehachse 32 auch eine feste Aufhängung des Antriebszylinders 24 zu ermöglichen, ist der antriebseitige Gelenkbolzen 34 des Schwenkhebels 30 in einer Führungskulisse 56 gelagert, die einen zusätzlichen translatorischen Freiheitsgrad verleiht, der als Ausgleich für die Bogenhöhe bei der Drehbewegung des Schwenkhebels 30 gegenüber der Kolbenstange 28 notwendig ist.

Das in dem Ausführungsbeispiel gemäß Fig. 4 und 5 beschriebene Rückhaltesystem lässt sich sowohl für eine langsame, schonende Entfaltung als auch für eine schnelle, zeitkritische Entfaltung einsetzen. Im ersteren Fall wird durch einen vorausschauenden Pre-Crash-Sensor der Auslöseeinheit 42 der Federantrieb 26 präventiv ausgelöst. Durch die freigesetzten Federkräfte schieben die Kolben 52 die Kolbenstangen 28 beidseitig durch die Zylinderböden hindurch aus und stellen mittels der Gelenkbolzen 34 die Schwenkhebel 30 auf, wobei deren Drehbewegung um die Drehachse 32 durch eine Translation der Schubgelenke 36 in der prallplattenseitigen Kulisse 58 wieder in eine reine Translationsbewegung der Prallplatte 16 gewandelt wird. Die Prallplatte 16 wird dabei relativ langsam und damit unkritisch für die zu schützende Person in die in Fig. 5 gezeigte Ausfahrstellung bewegt.

Bei Kontakt mit der zu schützenden Person, die gegebenenfalls ihre kinetische Energie in das System einträgt, dreht sich die Richtung des Kraftflusses durch den Umlenkmechanismus 22 um. Die Krafteinleitung in die Aufpralldämpfer 46 ermöglicht nunmehr das Sperrstück 40, das sich im Rücklauf gegen eine senkrechte Zahnflanke blockierend abstützt. Diese Wirkung wird in jeder Ausfahrstellung erreicht, sobald die Prallplatte 16 auf ein Hindernis stößt, dessen Reaktionskraft die Federkraft übersteigt. Bei der Energieabsorption in den Aufpralldämpfern 46 als möglicherweise lebensrettende Maßnahme wird die lrreversibilität des Formänderungsvorgangs in Kauf genommen. Sollte jedoch ein Aufprall nicht stattfinden, kann das Sperrstück 40 entriegelt werden und die Prallplatte 16 über einen nicht gezeigten Reversiermotor unter Vorspannung der Federn 26 in die Ruhestellung zurückgezogen werden. Nach erneuter Sperrerbetätigung ist das System dann wieder in Bereitschaft für das nächste Auslösesignal.

Für den Fall, dass das System ohne Zeitverzug betätigt werden muss, genügt die Kraft der Federn 26 dazu nicht. Daher wird durch Zündung des Gasgenerators 54 auf pyrotechnischem Wege ein Treibgas erzeugt, mit welchem die stangenseitigen Zylinderkammern beaufschlagt werden. Der Gasdruck ist dabei so hoch, dass die Kolben 52 in wenigen Millisekunden in ihre Endposition beschleunigt werden und die Prallplatte 16 schlagartig entfaltet wird.

Grundsätzlich lässt sich das beschriebene Schutzsystem an verschiedenen Stellen im Kraftfahrzeug vorteilhaft einsetzen, beispielsweise auch im Bereich einer Türverkleidung oder einer B-Säule als Seitenaufprallschutz.

## Patentansprüche

1. Insassenschutzsystem für ein Fahrzeug mit einem vorzugsweise als Prallplatte ausgebildeten, eine dem Fahrzeuginsassen zugewandte Prallfläche (44) aufweisenden Rückhaltekörper (16) und einer in einer Gefahrensituation auslösbaren Ausfahrvorrichtung (18) für eine translatorische Ausfahrbewegung des Rückhaltekörpers (16) zwischen einer Ruhestellung und einer zu dem Fahrzeuginsassen hin verlagerten Ausfahrstellung, **dadurch gekennzeichnet, dass** die Ausfahrvorrichtung (18) einen Querantrieb (20) für eine lineare Antriebsbewegung quer zur Ausfahrrichtung und einen Umlenkmechanismus (22) zur Umlenkung der Antriebsbewegung in die Ausfahrbewegung aufweist.

2. Insassenschutzsystem nach Anspruch 1, **dadurch gekennzeichnet, dass** der Umlenkmechanismus (22) mindestens einen um eine zur Antriebs- und Ausfahrbewegung senkrechte Drehachse (32) schwenkbaren, zweiarmigen Schwenkhebel (30) aufweist, wobei der Schwenkhebel (30) endseitig über Gelenkanschlüsse (34,36) mit dem Querantrieb (20) und dem Rückhaltekörper (16) gekoppelt ist.

3. Insassenschutzsystem nach Anspruch 2, **dadurch gekennzeichnet, dass** der Schwenkhebel (30) als zweiarmiger Winkelhebel im Bereich der Drehachse (32) abgewinkelt ist.

4. Insassenschutzsystem nach Anspruch 2 oder 3, **dadurch gekennzeichnet, dass** der Schwenkhebel (30) an einem ausfahrseitigen Hebelarm über ein Schubgelenk (36) mit dem Rückhaltekörper (16) verbunden ist, wobei der Rückhaltekörper (16) eine parallel zu der Antriebsrichtung verlaufende Schubführung (58) aufweist.

5. Insassenschutzsystem nach einem der Ansprüche 2 bis 4, **dadurch gekennzeichnet, dass** der Schwenkhebel (30) an einem antriebseitigen Hebelarm an einer in Antriebsrichtung geführten Antriebsstange (28) vorzugsweise in einer Führungskulisse (56) angelenkt ist.

6. Insassenschutzsystem nach einem der Ansprüche 1 bis 5, **dadurch gekennzeichnet, dass** der Umlenkmechanismus (22) zwei bezüglich einer senkrecht zur Antriebsrichtung verlaufenden Mittelebene spiegelsymmetrisch zueinander angeordnete Hebelgestänge (28,30) aufweist.

7. Insassenschutzsystem nach einem der Ansprüche 1 bis 6, **dadurch gekennzeichnet, dass** der Querantrieb (20) einen orthogonal zur Ausfahrrichtung ausgerichteten Antriebszylinder (24) aufweist.

8. Insassenschutzsystem nach Anspruch 7, **dadurch gekennzeichnet, dass** in dem Antriebszylinder (24) mindestens eine im Ruhezustand vorgespannte, mit dem Umlenkmechanismus (22) gekoppelte Antriebsfeder (26) gelagert ist.

9. Insassenschutzsystem nach Anspruch 7 oder 8, **dadurch gekennzeichnet, dass** der Antriebszylinder (24) über eine pyrotechnische Treibladung (54) mit Druckgas beaufschlagbar ist und eine mit dem Umlenkmechanismus (22) gekoppelte Kolbenstange (28,52) aufweist.

10. Insassenschutzsystem nach einem der Ansprüche 7 bis 9, **dadurch gekennzeichnet, dass** der Antriebszylinder (24) wahlweise mechanisch und/oder pyrotechnisch-pneumatisch betätigbar ist.

11. Insassenschutzsystem nach einem der Ansprüche 1 bis 10, **dadurch gekennzeichnet, dass** die Ausfahrvorrichtung (18) ein in verschiedenen Ausfahrstellungen wirksames Gesperre (38), insbesondere ein einseitiges Zahnrichtgesperre zur Rücklaufsicherung des Querantriebs (20) bei der Ausfahrbewegung aufweist.

12. Insassenschutzsystem nach einem der Ansprüche 1 bis 11, **gekennzeichnet durch** einen unter Richtungsumkehr der Ausfahrbewegung über den Umlenkmechanismus (22) betätigbaren, unter Energieabsorption verformbaren Aufpralldämpfer (46).

13. Insassenschutzsystem nach Anspruch 12, **dadurch gekennzeichnet, dass** der Aufpralldämpfer (46) als Kraftübertragungsglied des Querantriebs (20) in Antriebsrichtung ausgerichtet ist.

14. Insassenschutzsystem nach Anspruch 12 oder 13, **dadurch gekennzeichnet, dass** der Aufpralldämpfer (46) durch ein in Antriebsrichtung ausgerichtetes Teleskoprohr (48) gebildet ist, welches entgegen einer Kraft- und/oder Formschlussverbindung (50) zusammenschiebbar ist.

15. Insassenschutzsystem nach einem der Ansprüche 1 bis 14, **dadurch gekennzeichnet, dass** die Ausfahrvorrichtung (18) durch eine Unfallerfassungseinrichtung, insbesondere einen Pre-Crash-Sensor (42) bei einer Gefährdungssituation präventiv auslösbar ist.

16. Insassenschutzsystem nach einem der Ansprüche 1 bis 15, **dadurch gekennzeichnet, dass** die Ausfahrvorrichtung (18) einen Reversierantrieb zum Zurückfahren des Rückhaltekörpers (16) in die Ruhestellung aufweist.

17. Insassenschutzsystem nach einem der Ansprüche 1 bis 16, **dadurch gekennzeichnet, dass** der Rückhaltekörper als Knieschutzplatte (16) für einen Beifahrer im Bereich der Instrumententafel (12) angeordnet und vorteilhafterweise zugleich als Handschuhkastenabdeckung ausgebildet ist.

## Claims

1. Passenger protection system for a vehicle with a restraining body (16), preferably constructed as a baffle plate and having a rebounding surface (44) facing the vehicle passenger, and a retractable device (18), which can be triggered in a dangerous situation, for a translatory extending movement of the restraining body (16) between a neutral position and an extended position displaced towards the vehicle passenger, **characterised in that** the retractable device (18) has a transverse drive (20) for a linear drive movement transversely to the extending direction and a reversing mechanism (22) for reversing the drive movement into the extending movement.

2. Passenger protection system according to claim 1, **characterised in that** the reversing mechanism (22) has at least one two-armed swivelling lever (30), swivellable about a hinge pin (32) perpendicular to the drive and extending movement, the swivelling lever (30) being coupled to the transverse drive (20) and the restraining body (16) on its ends via articulated connections (34, 36).

3. Passenger protection system according to claim 2, **characterised in that** the swivelling lever (30) is tangent-bent in the area of the hinge pin (32) as a two-armed angular lever.

4. Passenger protection system according to claim 2 or 3, **characterised in that** the swivelling lever (30) is connected to the restraining body (16) on a lever arm on the extending side via a prismatic joint (36), the restraining body (16) having a push-guide (58) running parallel to the drive direction.

5. Passenger protection system according to one of claims 2 to 4, **characterised in that** the swivelling lever (30) is linked to a drive rod (28), guided in the drive direction, preferably in a guide connecting link (56), on a drive-side lever arm.

6. Passenger protection system according to one of claims 1 to 5, **characterised in that** the reversing mechanism (22) has two lever rods (28, 30) arranged mirror-symmetrically to one another in respect of a centre plane running perpendicular to the drive direction.

7. Passenger protection system according to one of claims 1 to 6, **characterised in that** the transverse drive (20) has a drive cylinder (24) aligned orthogonally to the extending direction.

8. Passenger protection system according to claim 7, **characterised in that** at least one drive spring (26), biased in the neutral state and coupled to the reversing mechanism (22), is held in the drive cylinder (24).

9. Passenger protection system according to claim 7 or 8, **characterised in that** the drive cylinder (24) can be charged with compressed gas via a pyrotechnic propellant charge (54) and has a piston rod (28, 52) coupled to the reversing mechanism (22).

10. Passenger protection system according to one of claims 7 to 9, **characterised in that** the drive cylinder (24) can optionally be actuated mechanically and/or pyrotechnically-pneumatically.

11. Passenger protection system according to one of claims 1 to 10, **characterised in that** the retractable device (18) has a locking mechanism (38), active in various extending positions, in particular a one-sided toothed directional locking mechanism, to stop the transverse drive (20) from running back during the extending movement.

12. Passenger protection system according to one of claims 1 to 11, **characterised by** an impact absorber (46), actuatable via the reversing mechanism (22) when the direction of the extending movement is reversed and deformable when energy is absorbed.

13. Passenger protection system according to claim 12, **characterised in that** the impact absorber (46) is aligned in the drive direction as a force-transmitting element of the transverse drive (20).

14. Passenger protection system according to claim 12 or 13, **characterised in that** the impact absorber (46) is formed by a telescopic tube (48), aligned in the drive direction, which can be pushed together against a non-positive- or positive-locking connection (50).

15. Passenger protection system according to one of claims 1 to 14, **characterised in that** the retractable device (18) can be preventatively triggered in the event of a threatening situation by an accident detection device, in particular a pre-crash sensor (42).

16. Passenger protection system according to one of claims 1 to 15, **characterised in that** the retractable device (18) has a reversing drive for moving the restraining body (16) back into the neutral position.

17. Passenger protection system according to one of claims 1 to 16, **characterised in that** the restraining body is arranged as a knee-protection plate (16) for a passenger in the area of the instrument panel (12) and is advantageously made simultaneously as a glove-compartment cover.

## Revendications

1. Système de protection d'occupants pour un véhicule, comprenant un corps de retenue (16) réalisé, de préférence, sous la forme d'une platine d'impacts et muni d'une surface d'impacts (44) tournée vers l'occupant du véhicule, et un dispositif de déploiement (18) pouvant être déclenché dans une situation périlleuse, en vue d'un mouvement translatoire sortant du corps de retenue (16) entre une position de repos et une position déployée décalée vers l'occupant du véhicule, **caractérisé par le fait que** le dispositif de déploiement (18) comporte un entraînement transversal (20) destiné à un mouvement linéaire d'entraînement transversalement par rapport à la direction du déploiement, et un mécanisme de renvoi (22) pour convertir le mouvement d'entraînement en le mouvement sortant ou de déploiement.

2. Système de protection d'occupants selon la revendication 1, **caractérisé par le fait que** le mécanisme de renvoi (22) présente au moins un levier pivotant (30) à deux bras, pouvant pivoter autour d'un axe de rotation (32) perpendiculaire au mouvement d'entraînement et au mouvement sortant, ledit levier pivotant (30) étant accouplé par ses extrémités à l'entraînement transversal (20) et au corps de retenue (16), par l'intermédiaire de solidarisations articulées (34, 36).

3. Système de protection d'occupants selon la revendication 2, **caractérisé par le fait que** le levier pivotant (30), revêtant la forme d'un levier coudé à deux bras, est coudé dans la région de l'axe de rotation (32).

4. Système de protection d'occupants selon la revendication 2 ou 3, **caractérisé par le fait que** le levier pivotant (30) est relié au corps de retenue (16) sur un bras de levier situé côté déploiement, par l'intermédiaire d'une articulation coulissante (36), ledit corps de retenue (16) étant pourvu d'un guide de coulissement (58) s'étendant parallèlement à la direction de l'entraînement.

5. Système de protection d'occupants selon l'une des revendications 2 à 4, **caractérisé par le fait que** le levier pivotant (30) est articulé, par un bras de levier situé côté entraînement, sur une tige d'entraînement (28) guidée dans la direction de l'entraînement, de préférence dans une coulisse de guidage (56).

6. Système de protection d'occupants selon l'une des revendications 1 à 5, **caractérisé par le fait que** le mécanisme de renvoi (22) présente deux tringleries (28, 30) agencées spéculairement l'une à l'autre vis-à-vis d'un plan médian s'étendant perpendiculairement à la direction de l'entraînement.

7. Système de protection d'occupants selon l'une des revendications 1 à 6, **caractérisé par le fait que** l'entraînement transversal (20) possède un cylindre d'entraînement (24) orienté orthogonalement vis-à-vis de la direction du déploiement.

8. Système de protection d'occupants selon la revendication 7, **caractérisé par le fait qu'**au moins un ressort d'entraînement (26), précontraint au repos et accouplé au mécanisme de renvoi (22), est logé dans le cylindre d'entraînement (24).

9. Système de protection d'occupants selon la revendication 7 ou 8, **caractérisé par le fait que** le cylindre d'entraînement (24) peut être sollicité par une pression gazeuse, par l'intermédiaire d'une charge propulsive pyrotechnique (54), et présente une tige (28, 52) de piston qui est accouplée au mécanisme de renvoi (22).

10. Système de protection d'occupants selon l'une des revendications 7 à 9, **caractérisé par le fait que** le cylindre d'entraînement (24) peut être sélectivement actionné en mode mécanique et/ou pyrotechnique-pneumatique.

11. Système de protection d'occupants selon l'une des revendications 1 à 10, **caractérisé par le fait que** le dispositif de déploiement (18) comporte un verrou (38) agissant dans différentes positions déployées, en particulier un verrou denté à action unidirectionnelle, en vue d'interdire un retour de l'entraînement transversal (20) au cours du mouvement sortant.

12. Système de protection d'occupants selon l'une des revendications 1 à 11, **caractérisé par** un amortisseur d'impacts (46) déformable avec absorption d'énergie et pouvant être actionné par l'intermédiaire du mécanisme de renvoi (22), avec inversion directionnelle du mouvement sortant.

13. Système de protection d'occupants selon la revendication 12, **caractérisé par le fait que** l'amortisseur d'impacts (46) est orienté dans la direction de l'entraînement, en tant qu'organe de transmission de forces de l'entraînement transversal (20).

14. Système de protection d'occupants selon la revendication 12 ou 13, **caractérisé par le fait que** l'amortisseur d'impacts (46) est matérialisé par un tube télescopique (48) orienté dans la direction de l'entraînement, et pouvant être rétracté en opposition à une solidarisation (50) mécanique et/ou par concordance de formes.

15. Système de protection d'occupants selon l'une des revendications 1 à 14, **caractérisé par le fait que** le dispositif de déploiement (18) peut être déclenché préventivement, dans une situation menaçante, par un système de détection d'accidents revêtant, en particulier, la forme d'un capteur anticipatif de collisions (42).

16. Système de protection d'occupants selon l'une des revendications 1 à 15, **caractérisé par le fait que** le dispositif de déploiement (18) comporte un entraînement réversible, afin de ramener le corps de retenue (16) à la position de repos.

17. Système de protection d'occupants selon l'une des revendications 1 à 16, **caractérisé par le fait que** le corps de retenue est disposé dans la région du tableau de bord (12), en tant que genouillère protectrice (16) affectée à un passager, et est simultanément réalisé, de préférence, en tant que capot de boîte à gants.
